# EUROPEAN PATENT SPECIFICATION

(11) **EP 3 246 240 B1**
(45) Date of publication and mention of the grant of the patent: **22.08.2018**
(21) Application number: 16170583.5
(22) Date of filing: 20.05.2016
(51) Int. Cl.: B62M 3/08, A43B 5/14

(54) **ADJUSTABLE BICYCLE SHOE CLEAT**
VERSTELLBARER FAHRRADSCHUHCLEAT
CALE DE CHAUSSURE DE BICYCLETTE RÉGLABLE

(43) Date of publication of application: 22.11.2017
(73) Proprietor: VP Components Co., Ltd., Taichung City 43865 (TW)
(72) Inventor: LIN, Wen-Hwa, Taichung City (TW)
(74) Representative: Viering, Jentschura & Partner mbB Patent- und Rechtsanwälte

(56) References cited:
- DE-A1- 3 135 345
- FR-A1- 2 397 319
- US-A- 5 125 173

## Description

### BACKGROUND OF THE INVENTION

### 1. Field of the Invention:

The present invention relates to bicycle shoe cleats, and more particularly, to an adjustable bicycle shoe cleat.

### 2. Description of the Related Art:

A bicycle shoe cleat is usually fixed on the bottom of the bicycle shoe for being engaged with a clipless pedal of the bicycle, such that the user stably cast the pedaling force on the pedal, thereby increasing the pedal rising and lowering efficiency.

US5125173 discloses a cycling shoe comprising a pair of attaching holes for attaching a cleat to a sole of the shoe, Z wherein the attaching holes are disposed in the sole. The attaching holes are a pair of elongated slots formed along a longitudinal direction of the shoe and are disposed substantially in parallel with each other along a lateral direction of the shoe. The elongated slots are allowed to alternately include a series of small holes that are longitudinally aligned along the shoe. By use of the elongated slots disposed in the sole of the shoe, a longitudinal adjustment of the cleat-attaching position is achieved.

However, a conventional bicycle shoe cleat is only able to be longitudinally or transversely adjusted, failing to meet the user's demand. Different users may have different pedaling angles due to possible foot arch pronation, foot arch supination, knee injury or knee surgery, so as to affect the pedaling efficacy. If the shoe cleat is unable to be adjusted to achieve a suitable engaging angle, the user is only capable of engaging the shoe cleat and the clipless pedal at a fixed angle. As a result, the user is prevented from smoothly and efficiently disengaging the shoe cleat from the clipless pedal, causing time wasting or even a dangerous situation. Furthermore, the angles of the left foot and right foot of the user against the left and right clipless pedals may not be identical. Therefore, choosing a suitable and applicable shoe cleat is relatively important for a bicycle rider.

### SUMMARY OF THE INVENTION

For improving aforementioned issues, embodiments of the present invention disclose an adjustable bicycle shoe cleat. When being at a disengagement status, with the adjusting bore of the cleat body providing a bias space or rotation allowance, the cleat body is able to bias at an angle against the bottom of the bicycle shoe. The bicycle rider is allowed to adjust the cleat to a position with a suitable angle, thereby smoothly and efficiently engaging or disengaging the shoe cleat from the clipless pedal.

For achieving the objectives above, embodiments of the present invention provide an adjustable bicycle shoe cleat which is fixed to a bottom plate of a bicycle shoe, wherein the bottom plate of the bicycle shoe is provided with two combining holes. The adjustable bicycle shoe cleat comprises:
a cleat body provided with a front engaging end and a rear engaging end in opposite with the front engaging end for being engaged with a clipless pedal, two adjusting bores symmetrically and transversely disposed between the front engaging end and the rear engaging end, each adjusting bore comprising a small arch section and a large arch section, the two small arch sections disposed face to face; and
a fastening assembly provided with two screw members passing through the two adjusting bores for loosenably screwing the cleat body to the two combining holes, such that the cleat body is able to be biasedly positioned against the bottom plate of the bicycle shoe. With such configuration, the shoe cleat is disposed in a position defining an adjustable angle with the bottom plate of the bicycle shoe.

In embodiments of the present invention, the combining holes are strip-shaped and longitudinally disposed in parallel on the bottom plate of the bicycle shoe.

In embodiments of the present invention, the bottom plate of the bicycle shoe is provided with an inner face and an outer face. The fastening assembly further includes a first fixing member disposed on the inner face and a second fixing member disposed on the outer face. The second fixing member and the cleat body are passed through by the screw members and thereby screwed to the first fixing member.

In embodiments of the present invention, the cleat body is provided with a first surface and a second surface. The first surface faces the combining holes. The adjusting bores are concavely disposed from the first surface toward the second surface. The second surface is concavely provided with a containing recess having a square measure larger than the square measure of the second fixing member, wherein the containing recess contains the second fixing member.

In embodiments of the present invention, the first fixing member is provided with two pillars passing through the combining holes. Further, each pillar has a screw hole for the screw member to be screwed thereto.

In embodiments of the present invention, the second fixing member is provided with two counterbores for containing the head part of the screw member, thereby preventing the head part of the screw member from protruding from the second surface of the cleat body.

In embodiments of the present invention, two sides of the containing recess are provided with a blocking edge, respectively.

In embodiments of the present invention, the blocking edges are V-shaped.

In embodiments of the present invention, each screw member is provided with a tool driving bore.

In embodiments of the present invention, the inner face of the bottom plate of the bicycle shoe is provided with a recess, such that the combining holes are disposed in the recess.

With such configuration, the present invention allows the user/bicycle rider to adjust the angle define by the shoe cleat and the bottom plate of the bicycle shoe in advance, whereby the shoe cleat is smoothly and efficiently engaged with or disengaged from the clipless pedal. The time needed for the disengagement is shortened and the smoothness of the pedal being pedaled to rise and lower is increased.

### BRIEF DESCRIPTION OF THE DRAWINGS

**Fig. 1** is an exploded view of the adjustable bicycle shoe cleat and the bottom plate of the bicycle shoe in accordance with embodiments of the present invention.
**Fig. 2** is an exploded view displaying the content of Fig. 1 from another point of view.
**Fig. 3** is a front view of the second surface of the cleat body in accordance with embodiments of the present invention.
**Fig. 4** is a sectional schematic view illustrating an embodiment of the present invention installed on the bottom plate of the bicycle shoe.
**Fig. 5** is a bottom view of an embodiment of the present invention installed on the bottom plate of the bicycle shoe.
**Fig. 6** is another bottom view of an embodiment of the present invention installed on the bottom plate of the bicycle shoe, illustrating the cleat body being biasedly adjusted against the bottom plate of the bicycle shoe.
**Fig. 7** is another bottom view of an embodiment of the present invention installed on the bottom plate of the bicycle shoe, illustrating the cleat body being longitudinally adjusted against the bottom plate of the bicycle shoe.
**Fig. 8** is another bottom view of an embodiment of the present invention installed on the bottom plate of the bicycle shoe, illustrating the cleat body being transversely adjusted against the bottom plate of the bicycle shoe.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

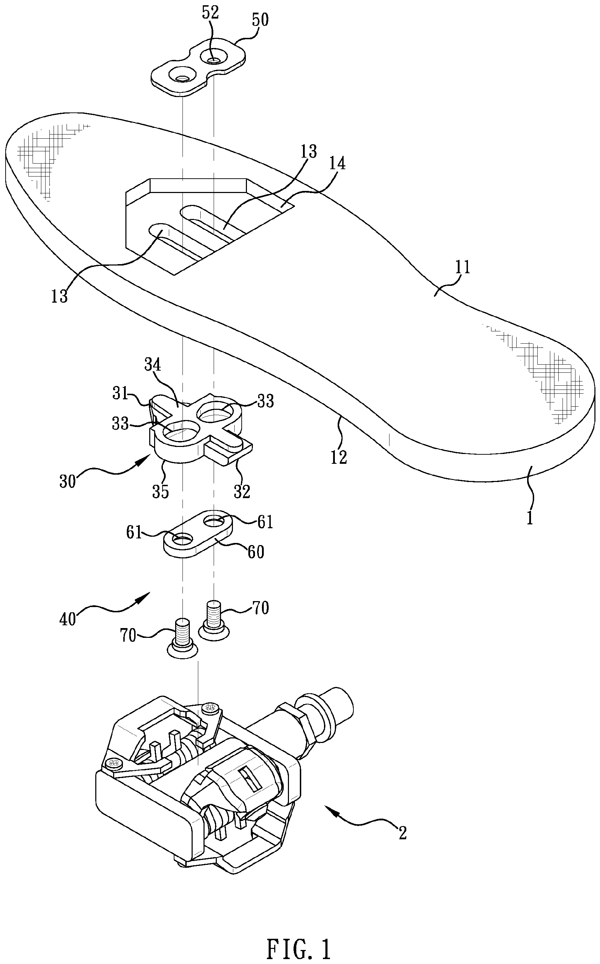

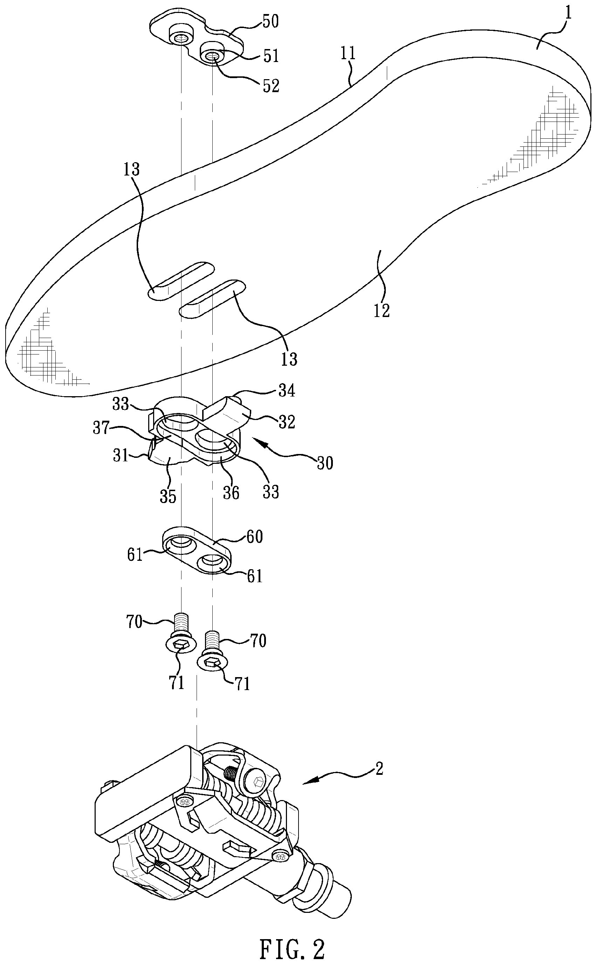

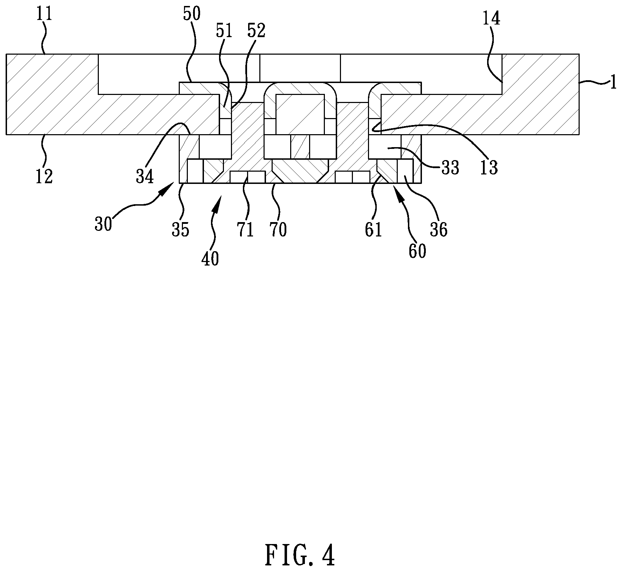

Referring to **Fig. 1** to **Fig. 6****,** the embodiments of the present invention provide an adjustable bicycle shoe cleat, which is fixed on a bottom plate **1** of a bicycle shoe for being combined to a clipless pedal **2.** The adjustable bicycle shoe cleat comprises a cleat body **30** and a fastening assembly **40.** The bottom plate **1** is provided with an inner face **11,** an outer face **12,** and two combining holes **13,** wherein the combining holes **13** are strip-shaped and longitudinally disposed in parallel on the bottom plate **1.** Further, the inner face **11** has a recess **14,** with the two combining holes **13** disposed therein.

The cleat body **30** is provided with a front engaging end **31** and a rear engaging end **32** disposed in opposite to the front engaging end **31.** When the cleat body **30** is mounted on the bottom plate **1** of the bicycle shoe by use of the fastening assembly **40,** the front engaging end **31** points to the toes of the user/bicycle rider, while the rear engaging end **32** points to the heel of the user/bicycle rider. The front engaging end **31** and the rear engaging end **32** are engaged with the clipless pedal **2.**

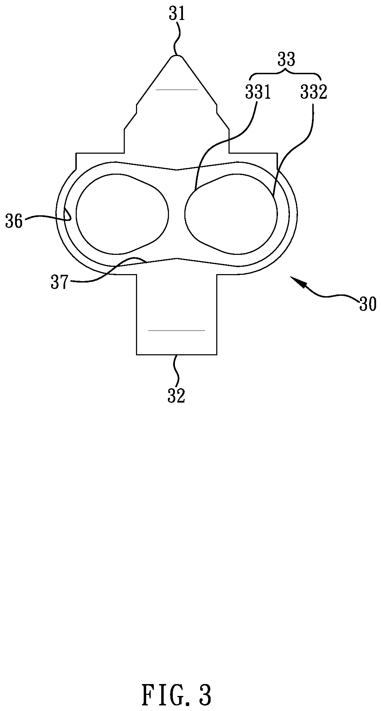

Referring to **Fig. 3****,** two adjusting bores **33** are symmetrically and transversely disposed between the front engaging end **31** and the rear engaging end **32.** The adjusting bores **33** are not circularly shaped. Each adjusting bore **33** comprises a small arch section **331** and a large arch section **332,** wherein the two small arch sections **331** are disposed face to face adjacent the center of the cleat body **30.** The large arch sections **332** are disposed adjacent to the outer periphery of the cleat body **30.**

The cleat body **30** further comprises a first surface **34** and a second surface **35.** The first surface **34** faces the combining holes **13.** The two adjusting bores **33** are concavely disposed from the first surface **34** toward the second surface **35.** The second surface **35** is concavely provided with a containing recess **36,** wherein two sides of the containing recess **36** are provided with a blocking edge **37,** respectively. In the preferred embodiments, the blocking edges **37** are V-shaped.

The fastening assembly **40** is provided with a first fixing member **50,** a second fixing member **60,** and two screw members **70.** The first fixing member **50** is disposed on the inner face **11** of the bottom plate **1** of the bicycle shoe, preferably in the recess **14.** Also, the first fixing member **50** has two pillars **51** passing through the two combining holes **13,** wherein the two pillars **51** have a screw hole **52,** respectively. The second fixing member **60** is disposed on the outer face **12** and contained in the containing recess **36** of the cleat body **30.** In the preferred embodiment, the containing recess **36** has a square measure larger than the square measure of the second fixing member **60.** The second fixing member **60** has two counterbores **61** for containing the head part of the two screw members **70,** whereby the head part of the two screw members **70** are prevented from protruding from the second surface **35** of the cleat body **30.** Furthermore, each screw member **70** is provided with a hexagonal tool driving bore **71** for being driven by a hexagonal wrench.

When the cleat body **30** is screwed to the bottom plate **1** of the bicycle shoe by the fastening assembly **40,** each of the two screw members **70** passes through the respective counterbore **61** on the second fixing member **60,** the adjusting bore **33** of the cleat body **30,** and the respective combining hole **13** to be screwed to the respective screw hole **52** on the first fixing member **50,** whereby the cleat body **30** is loosenably mounted on the two combining holes **13.**

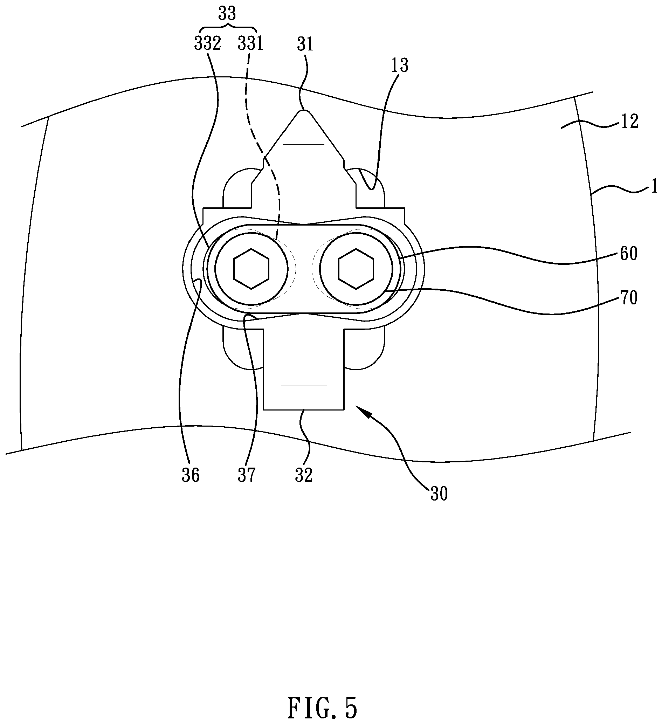

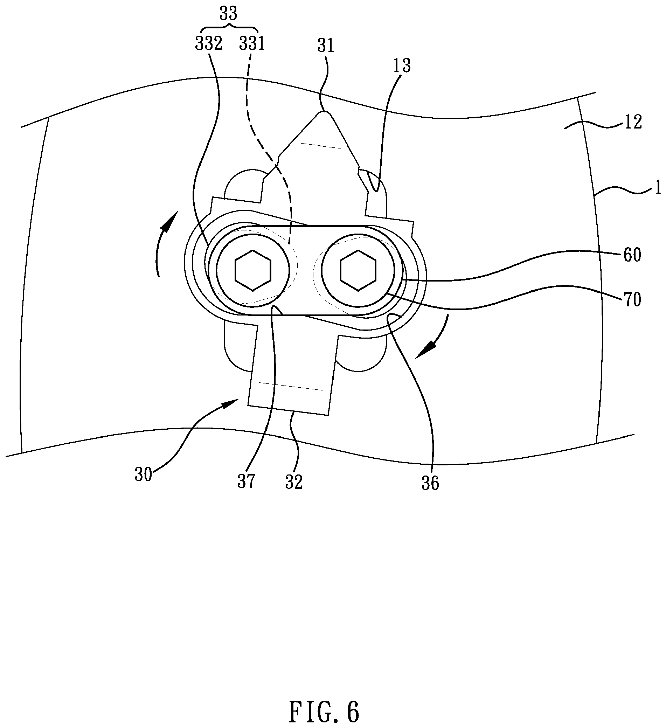

Referring to **Fig. 5** and **Fig. 6****,** when the two screw members **70** are loosened, with the large arch section **332** of the adjusting bores **33,** the cleat body **30** is provided with a biasing space or rotating allowance, such that the cleat body **30** is able to be biasedly positioned to define a bias angle with the bottom plate **1** of the bicycle shoe. By adjusting the angle defined by the cleat body **30** and the bottom plate **1,** the respective pointing direction of the front engaging end **31** and the rear engaging end **32** are adjusted. As a result, the user/bicycle rider is allowed to adjust a suitable angle included by the cleat body **30** and the bottom plate **1** in advance, so as to smoothly and efficiently engage or disengage the cleat body **30** and the clipless pedal **2.** The time needed for disengagement is shortened, and the smoothness of user pedaling is facilitated. Especially, when the cleat body **30** is adjusted to reach the maximum adjusting limitation, the blocking edge **37** contacts and stop the second fixing member **60** as a stopping boundary.

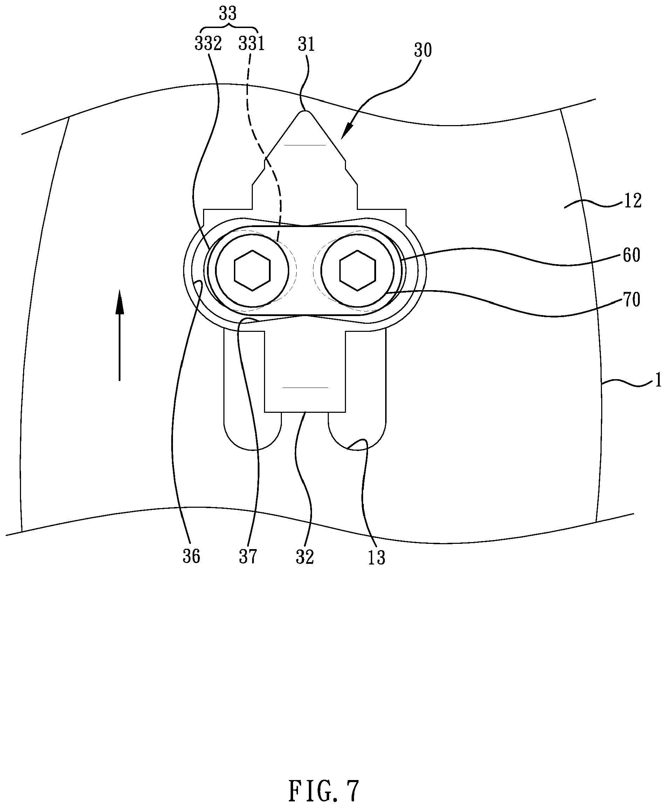

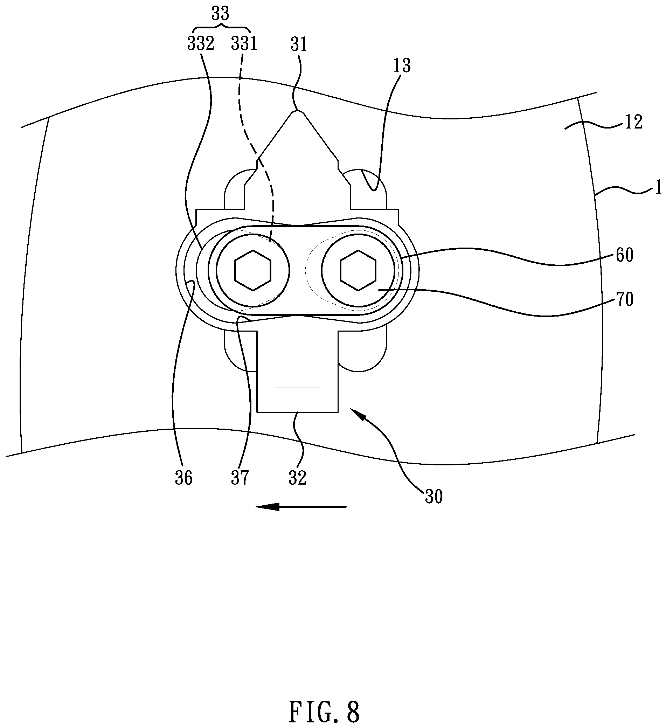

In addition, referring to **Fig. 7** and **Fig. 8****,** the longitudinal or transverse adjustment is made possible in the embodiments provided by the present invention. When the two screw members **70** are loosened, the cleat body **30** is able to be longitudinal adjusted along the combining holes **13.** Also, due to the adjusting bores **33** being not circularly shaped, the cleat body **30** is able to be transversely adjusted along the disposal direction of the adjusting bores **33** according to the pedaling tendency suitable for different users/bicycle riders.

With such configuration, a biasing space or rotating allowance is provided by the large arch sections **332** and the small arch sections **331** of the adjusting bores **33.** When the screw members **70** are loosened against the first fixing member **50,** the cleat body **30** is allowed to be biasedly positioned to define a bias angle with the bottom plate **1** of the bicycle shoe, such that a suitable angle is produced between the bicycle shoe and the clipless pedal **2** according to the pedaling gesture of the user/rider, thus facilitating the engagement and disengagement of the bicycle shoe and the clipless pedal **2** and enhancing the convenience of usage thereof.

Although particular embodiments of the invention have been described in detail for purposes of illustration, various modifications and enhancements may be made without departing from the scope of the invention. Accordingly, the invention is not to be limited except as by the appended claims.

## Claims

1. An adjustable bicycle shoe cleat which is fixed to a bottom plate (1) of a bicycle shoe, wherein the bottom plate (1) is provided with two combining holes (13), the adjustable bicycle shoe cleat comprising:
a cleat body (30) provided with a front engaging end (31) and a rear engaging end (32) in opposite with the front engaging end (31) for being engaged with a clipless pedal (2),
**characterized in that** the cleat body (30) is further provided with two adjusting bores (33) symmetrically and transversely disposed between the front engaging end (31) and the rear engaging end (32), each adjusting bore (33) comprising a small arch section (331) and a large arch section (332), the two small arch sections (331) being disposed face to face; and **in that** the adjustable bicycle shoe cleat further comprises a fastening assembly (40) provided with two screw members (70) passing through the two adjusting bores (33) for loosenably screwing the cleat body (30) to the two combining holes (13), such that the cleat body (30) is able to be biasedly positioned against the bottom plate (1) of the bicycle shoe.

2. The adjustable bicycle shoe cleat of claim 1, wherein the two combining holes (13) are strip-shaped and longitudinally disposed in parallel on the bottom plate (1) of the bicycle shoe.

3. The adjustable bicycle shoe cleat of claim 1, wherein the bottom plate (1) is provided with an inner face (11) and an outer face (12), the fastening assembly (40) further comprising a first fixing member (50) disposed on the inner face (11) and a second fixing member (60) disposed on the outer face (12), the screw members (70) passing through the second fixing member (60) and the cleat body (30) to be screwedly mounted to the first fixing member (50).

4. The adjustable bicycle shoe cleat of claim 3, wherein the cleat body (30) is provided with a first surface (34) and a second surface (35), the first surface facing the combining holes (13), the two adjusting bores (33) are concavely disposed from the first surface (34) toward the second surface (35), the second surface (35) is concavely provided with a containing recess (36), a square measure of the containing recess (36) being larger than a square measure of the second fixing member (60), the containing recess (36) containing the second fixing member (60).

5. The adjustable bicycle shoe cleat of claim 3, wherein the first fixing member (50) is provided with two pillars (51) passing through the two combining holes (13), respectively, each of the pillars (51) having a screw hole (52) for the respective screw member (70) to be screwed thereto.

6. The adjustable bicycle shoe cleat of claim 4, wherein the second fixing member (60) is provided with two counterbores (61) for containing a head part of each of the screw members (70), so as to prevent the head parts of the screw members (70) from protruding from the second surface (35) of the cleat body (30).

7. The adjustable bicycle shoe cleat of claim 4, wherein two sides of the containing recess (36) are provided with a blocking edge (37), respectively.

8. The adjustable bicycle shoe cleat of claim 7, wherein the blocking edges (37) are V-shaped.

9. The adjustable bicycle shoe cleat of claim 1, wherein each of the screw members (70) is provided with a tool driving bore (71).

10. The adjustable bicycle shoe cleat of claim 1, wherein an inner face (11) of the bottom plate (1) is provided with a recess (14) for containing the two combining holes (13).

## Patentansprüche

1. Einstellbare Fahrradschuhplatte, die an einer Bodenplatte (1) eines Fahrradschuhs befestigt ist, wobei die Bodenplatte (1) mit zwei Kombinationslöchern (13) ausgebildet ist, wobei die einstellbare Fahrradschuhplatte umfasst:
einen Plattenkörper (30), der mit einem vorderen Eingriffsende (31) und einem dem vorderen Eingriffsende (31) gegenüberliegenden hinteren Eingriffsende (32) ausgebildet ist, um mit einem klipplosen Pedal (2) in Eingriff gebracht zu werden,
**dadurch gekennzeichnet, dass** der Plattenkörper (30) ferner ausgestattet ist mit
zwei Einstellbohrungen (33), die symmetrisch und quer zwischen dem vorderen Eingriffsende (31) und dem hinteren Eingriffsende (32) angeordnet sind, wobei jede Einstellbohrung (33) einen kleinen Bogenabschnitt (331) und einen großen Bogenabschnitt (332) aufweist, wobei die zwei kleinen Bogenabschnitte (331) einander gegenüberliegend angeordnet sind; und dass die einstellbare Fahrradschuhplatte ferner
eine Befestigungsanordnung (40), die mit zwei Schraubenelementen (70) ausgebildet ist, die durch die zwei Einstellbohrungen (33) zum lösbaren Einschrauben des Plattenkörpers (30) in die zwei Kombinationslöcher (13) verläuft, sodass der Plattenkörper (30) gegen die Bodenplatte (1) des Fahrradschuhs positioniert vorgespannt werden kann, umfasst.

2. Einstellbare Fahrradschuhplatte nach Anspruch 1, wobei die zwei Kombinationslöcher (13) streifenförmig und in Längsrichtung parallel auf der Bodenplatte (1) des Fahrradschuhs angeordnet sind.

3. Einstellbare Fahrradschuhplatte nach Anspruch 1, wobei die Bodenplatte (1) mit einer Innenfläche (11) und einer Außenfläche (12) ausgebildet ist, wobei die Befestigungsanordnung (40) ferner ein an der Innenfläche (11) angeordnetes erstes Befestigungselement (50) umfasst und ein an der Außenfläche (12) angeordnetes zweites Befestigungselement (60) umfasst, wobei die Schraubenelemente (70) durch das zweite Befestigungselement (60) und der Plattenkörper (30) an dem ersten Befestigungselement (50) durch verschrauben angebracht sind.

4. Einstellbare Fahrradschuhplatte nach Anspruch 3, wobei der Plattenkörper (30) mit einer ersten Oberfläche (34) und einer zweiten Oberfläche (35) ausgebildet ist, wobei die erste Oberfläche den Kombinationslöchern (13) zugewandt ist und die zwei Einstellbohrungen (33) konkav von der ersten Oberfläche (34) zu der zweiten Oberfläche (35) hin angeordnet sind, wobei die zweite Oberfläche (35) konkav mit einer Aufnahmevertiefung (36) ausgebildet ist, ein Flächenabmaß der Aufnahmevertiefung (36) größer als ein Flächenabmaß des zweiten Befestigungselements (60) ist, wobei die Aufnahmevertiefung (36) das zweite Befestigungselement (60) enthält.

5. Einstellbare Fahrradschuhplatte nach Anspruch 3, wobei das erste Befestigungselement (50) mit zwei Säulen (51) ausgebildet ist, die jeweils durch die zwei Kombinationslöcher (13) verlaufen, wobei jede der Säulen (51) ein Schraubenloch (52) für das jeweilige damit zu verschraubende Schraubenelement (70), aufweist.

6. Einstellbare Fahrradschuhplatte nach Anspruch 4, wobei das zweite Befestigungselement (60) mit zwei Senkungen (61) zum Aufnehmen eines Kopfteils von jedem der Schraubenelemente (70) ausgebildet ist, um so zu verhindern, dass die Kopfteile der Schraubenelemente (70) von der zweiten Oberfläche (35) des Plattenkörpers (30) hervorstehen.

7. Einstellbare Fahrradschuhplatte nach Anspruch 4, wobei zwei Seiten der Aufnahmeaussparung (36) jeweils mit einer Anschlagkante (37) ausgebildet sind.

8. Einstellbare Fahrradschuhplatte nach Anspruch 7, wobei die Anschlagkanten (37) V-förmig sind.

9. Einstellbare Fahrradschuhplatte nach Anspruch 1, wobei jedes der Schraubenelemente (70) mit einer Werkzeugantriebsbohrung (71) ausgebildet ist.

10. Einstellbare Fahrradschuhplatte nach Anspruch 1, wobei eine Innenfläche (11) der Bodenplatte (1) mit einer Aussparung (14) zum Aufnehmen der zwei Kombinationslöcher (13) ausgebildet ist.

## Revendications

1. Cale de chaussure de bicyclette réglable qui est fixée à une plaque inférieure (1) d'une chaussure de bicyclette, la plaque inférieure (1) comportant deux trous de combinaison (13), la cale de chaussure de bicyclette réglable comprenant :
un corps de cale (30) comportant une extrémité d'engagement avant (31) et une extrémité d'engagement arrière (32) opposée à l'extrémité d'engagement avant (31) pour être engagée avec une pédale automatique (2),
**caractérisée par le fait que** le corps de cale (30) comporte en outre deux alésages de réglage (33) disposés de manière symétrique et transversale entre l'extrémité d'engagement avant (31) et l'extrémité d'engagement arrière (32), chaque alésage de réglage (33) comprenant une section de petit arc (331) et une section de grand arc (332), les deux sections de petit arc (331) étant disposées face à face ; et
**par le fait que** la cale de chaussure de bicyclette réglable comprend en outre un ensemble de fixation (40) comportant deux éléments de vis (70) passant à travers les deux alésages de réglage (33) pour visser le corps de cale (30) de manière desserrable aux deux trous de combinaison (13), de telle sorte que le corps de cale (30) est apte à être positionné par sollicitation contre la plaque inférieure (1) de la chaussure de bicyclette.

2. Cale de chaussure de bicyclette réglable selon la revendication 1, dans laquelle les deux trous de combinaison (13) sont en forme de bande et sont disposés longitudinalement en parallèle sur la plaque inférieure (1) de la chaussure de bicyclette.

3. Cale de chaussure de bicyclette réglable selon la revendication 1, dans laquelle la plaque inférieure (1) comporte une face interne (11) et une face externe (12), l'ensemble de fixation (40) comprenant en outre un premier élément de fixation (50) disposé sur la face interne (11) et un second élément de fixation (60) disposé sur la face externe (12), les éléments de vis (70) passant à travers le second élément de fixation (60) et le corps de cale (30) afin d'être montés par vissage sur le premier élément de fixation (50).

4. Cale de chaussure de bicyclette réglable selon la revendication 3, dans laquelle le corps de cale (30) comporte une première surface (34) et une seconde surface (35), la première surface faisant face aux trous de combinaison (13), les deux alésages de réglage (33) sont disposés de manière concave à partir de la première surface (34) vers la seconde surface (35), la seconde surface (35) comporte, de manière concave, un évidement de réception (36), une mesure au carré de l'évidement de réception (36) étant plus grande qu'une mesure au carré du second élément de fixation (60), l'évidement de réception (36) recevant le second élément de fixation (60).

5. Cale de chaussure de bicyclette réglable selon la revendication 3, dans laquelle le premier élément de fixation (50) comporte deux plots (51) passant respectivement à travers les deux trous de combinaison (13), chacun des plots (51) ayant un trou de vis (52) pour visser l'élément de vis respectif (70) à celui-ci.

6. Cale de chaussure de bicyclette réglable selon la revendication 4, dans laquelle le second élément de fixation (60) comporte deux lamages (61) pour recevoir une partie tête de chacun des éléments de vis (70), de façon à empêcher les parties têtes des éléments de vis (70) de faire saillie à partir de la seconde surface (35) du corps de cale (30).

7. Cale de chaussure de bicyclette réglable selon la revendication 4, dans laquelle deux côtés de l'évidement de réception (36) comportent respectivement un bord de blocage (37).

8. Cale de chaussure de bicyclette réglable selon la revendication 7, dans laquelle les bords de blocage (37) sont en forme de V.

9. Cale de chaussure de bicyclette réglable selon la revendication 1, dans laquelle chacun des éléments de vis (70) comporte un alésage d'entraînement d'outil (71).

10. Cale de chaussure de bicyclette réglable selon la revendication 1, dans laquelle une face interne (11) de la plaque inférieure (1) comporte un évidement (14) pour recevoir les deux trous de combinaison (13).
